# EUROPÄISCHE PATENTSCHRIFT

(11) **EP 1 959 745 B1**
(45) Veröffentlichungstag und Bekanntmachung des Hinweises auf die Patenterteilung: **29.07.2020**
(21) Anmeldenummer: 06818685.7
(22) Anmeldetag: 21.11.2006
(51) Int. Cl.: A22C 13/00

(54) **NAHRUNGSMITTELHÜLLE AUS EINEM BESCHICHTETEN, FLÄCHENFÖRMIGEN FASERGEBILDE, VERFAHREN ZU IHRER HERSTELLUNG UND IHRE VERWENDUNG ALS KÜNSTLICHE WURSTHÜLLE**
FOOD CASING FROM A COATED, TWO-DIMENSIONAL FIBER STRUCTURE, METHOD FOR ITS MANUFACTURING AND ITS USE AS ARTIFICIAL SAUSAGE CASING
ENVELOPPE POUR PRODUITS ALIMENTAIRES, CONSTITUÉE D'UNE STRUCTURE FIBREUSE ENDUITE, DE FORME PLATE, PROCÉDÉ POUR SA FABRICATION ET SON USAGE COMME ENVELOPPE ARTIFICIEL DE SAUCISSE

(30) Priorität: 25.11.2005 DE 102005056574
(43) Veröffentlichungstag der Anmeldung: 27.08.2008
(73) Patentinhaber: Kalle GmbH, 65203 Wiesbaden (DE)
(72) Erfinder: HAMMER, Klaus-Dieter, 65120 Mainz (DE); GORD, Herbert, 55218 Ingelheim (DE); FÖGLER, Jens, 65232 Taunusstein (DE); SEELGEN, Michael, 65510 Idstein (DE)
(74) Vertreter: Plate, Jürgen
(86) Internationale Anmeldenummer: PCT/EP2006/011120
(87) Internationale Veröffentlichungsnummer: WO 2007/059911

(56) Entgegenhaltungen:
- WO-A-2004/098299
- DE-A1- 3 147 519
- DE-A1- 4 123 745
- DE-A1- 10 360 610
- US-A- 3 617 312

## Beschreibung

Nahrungsmittelhülle aus einem beschichteten, flächenförmigen Fasergebilde Die vorliegende Erfindung betrifft eine Nahrungsmittelhülle aus einem ein- oder beidseitig mit Acrylharz beschichteten, flächenförmigen Fasergebilde, ein Verfahren zu deren Herstellung und ihre Verwendung als künstliche Wursthülle.

Acrylatbeschichtete Fasergebilde und daraus hergestellte Nahrungsmittelhüllen sind bereits bekannt (beispielsweise aus der DE 31 47 519 A1, aus der WO 2004/098299 A, oder aus der DE 37 04 563 C2). Bei deren Herstellung wird beispielsweise ein Gewirke, ein Fadengelege oder ein leichter Vliesstoff in eine Acrylatschicht eingebracht. Das Flächengebilde kann aus Naturfasern (wie Baumwolle, Leinen oder Wolle), aus modifizierten Naturfasern (z.B. aus Regenerat-Cellulose oder aus Celluloseestern), aus vollsynthetischen Chemiefasern (z. B. aus Polyamid, Polyester, Polypropylen oder Polyacrylnitril) oder aus Gemischen davon bestehen. Das auf diese Weise gebildete Laminat wird getrocknet und in Bahnen passender Breite geschnitten. Die Bahnen werden zu Nahrungsmittelhüllen geformt und an den Rändern verklebt oder verschweißt. In den fertigen Nahrungsmittelhüllen bildet die Acrylatschicht allgemein die Außenseite. Es lassen sich auch Flächengebilde mit geringer Festigkeit verarbeiten, die nicht direkt beschichtet werden können, wenn diese in eine Acrylatharzschicht eingelegt werden. Das beschichtete Flächengebilde kann auch mehrere Acrylatschichten umfassen. Allein mit Acrylat beschichtete Hüllen zeigen jedoch meist eine zu geringe Bräthaftung, d.h. zwischen Brätoberfläche und der Innenseite der Hülle kann sich ein sogenannter Gelee-Absatz bilden. Darüber hinaus sind sie nicht sehr geschmeidig und haben in der Regel auch keine ausreichende Permeation.

Gegenstand der DE 41 23 745 A1 ist eine mehrschichtige Wursthülle mit einem textilen Trägermaterial und einer auf der Innenseite der Hülle befindlichen eßbaren Beschichtung. Die eßbare Beschichtung besteht dabei bevorzugt aus Gewürzen, Aromastoffen, Parmesan, Paniermehl oder einer Speckschicht. In Fig. 1 ist zudem eine Hülle dargestellt, die ein acrylat-beschichtetes Flächengebilde umfaßt, auf deren beschichtete Seite ein weißer Vliesstoff als Trägermaterial (2) kaschiert ist. Der Vliesstoff bildet die Außenseite der Hülle. Auf der Innenseite ist eine Eiweiß- oder Kollagenschicht angeordnet. Die Acrylat-Beschichtung befindet sich also auf der dem Nahrungsmittel, konkret dem Wurstbrät, abgewandten Seite des Flächengebildes.

Es bestand daher die Aufgabe, eine einfach und kostengünstig herzustellende Nahrungsmittelhülle bereitzustellen, die für Rauchbestandteile durchlässig ist. Die Hülle soll insbesondere für Wurstsorten geeignet sein, die als Aufschnittware ("slicer-Ware") häufig in einer Vakuumverpackung in den Handel geht und bei denen die Hülle bereits wieder entfernt ist. Brühwurst wird meistens in dieser Form angeboten. Die Hülle ist daher nur für die Dauer der Herstellung von Bedeutung. Sie muß während dieser Zeit die Form des endgültigen Produktes gewährleisten und einen Gewichtsverlust durch Austrocknung vermeiden. Zudem muß die Hülle geschmeidig sein, damit sie sich gut verarbeiten läßt, eine ausreichende Haftung an dem Nahrungsmittel aufweisen und leicht abschälbar sein. Sie muß zudem - entsprechend dem zu verpackenden Nahrungsmittel - eine ausreichende Permeation aufweisen. Schließlich soll sich die Hülle auch zu sogenannten Raffraupen aufstocken lassen, damit sie auf schnellaufenden, automatischen Füllmaschinen verarbeitet werden kann.

Lösen ließen sich die genannten Aufgaben überraschenderweise mit einer Hülle, die ein flächenförmiges Fasergebilde umfaßt, das auf der dem Nahrungsmittel zugewandten Seite mit Acrylharz und mindestens einem anderen Polymeren beschichtet ist. Das Acrylharz und mindestens ein anderes, in Form einer wäßrigen Lösung oder Dispersion mit dem ebenfalls in Form einer wäßrigen Dispersion aufgebrachten Acrylharz kombinierbares Polymer sind dabei miteinander vermischt. Wichtig ist, daß die dem Wurstbrät zugewandte Seite nicht - oder zumindest nicht allein - aus Acrylat besteht, weil ansonsten die Permeation der Hülle und/oder die Bräthaftung nicht ausreichend ist.

Gegenstand der vorliegenden Erfindung ist demgemäß eine Nahrungsmittelhülle; gemäß Anspruch 1 aus einem ein- oder beidseitig mit Acrylharz beschichteten, flächenförmigen Fasergebilde, wobei das Fasergebilde auf der dem Nahrungsmittel zugewandten Seite mit Acrylharz und mindestens einem anderen Polymer beschichtet ist und die Hülle eine H₂O-Permeation von 30 bis 600 l/m² d aufweist und für Rauchbestandteile durchlässig ist, wobei das andere Polymer mit dem Acrylharz abgemischt ist und das andere Polymer ein Polyvinylpyrrolidon oder ein Copolymer mit Vinylpyrrolidon-Einheiten, ein Homo- oder Copolymer aus bzw. mit Einheiten aus Vinylalkohol, ein Polyalkylenglykol, ein Polyacrylamid, oder ein Protein, ist.

Erfindungsgemäß st das Acrylharz in der Beschichtung auf der dem Nahrungsmittel zugewandten Seite mit mindestens einem anderen Polymer abgemischt. Vorzugsweise umfaßt die Beschichtung mehrere Schichten gleicher oder verschiedener Zusammensetzung. Schichten aus reinem Acrylat sollten dünn sein, damit die gewünschte Permeation nicht beeinträchtigt ist.

In einer besonderen Ausführungsform ist auch die von dem Nahrungsmittel abgewandte Seite der Hülle mit Acrylharz beschichtet und umfaßt ebenfalls mindestens ein anderes Polymer, das mit dem Acrylharz vermischt sein und/oder mindestens eine eigene Schicht bilden kann.

Das Acrylharz ist ein Homo- oder Copolymer aus bzw. mit Einheiten von Estern der Acrylsäure oder Methacrylsäure (im folgenden abgekürzt "(Meth)acrylsäure") mit - bevorzugt geradkettigen - (C₁ - C₁₀)Alkanolen. Ein bevorzugter Ester ist Butylacrylat. Als Comonomere geeignet sind insbesondere ungesättigte Mono- oder Dicarbonsäuren, wie (Meth)acrylsäure, Crotonsäure, Itaconsäure, Fumarsäure und/oder Maleinsäure, sowie (Meth)acrylsäure-hydroxyalkylester, wie 2-Hydroxy-ethyl-(meth)acrylat oder 3-Hydroxy-butyl-(meth)acrylat. Der Anteil der Comonomer-Einheiten aus Monomeren mit solchen hydrophilen Gruppen sollte zweckmäßig nicht mehr als 10 Gew.-% betragen, bevorzugt nicht mehr als 5 Gew.-%, bezogen auf das Gesamtgewicht des Copolymers. Anstelle oder auch zusätzlich zu diesen Comonomeren mit hydrophilen Gruppen können noch andere eingesetzt werden, beispielsweise Styrol, α-Methyl-styrol oder Vinylacetat. Die Copolymere können schließlich auch noch Einheiten aus Monomeren mit 2 oder mehr vernetzbaren Gruppen enthalten. Solche Monomere sind beispielsweise Ester aus (Meth)acrylsäure mit Polyolen. Dazu zählen beispielsweise Ethylenglykol-di(meth)acrylat, Butandioldi(meth)acrylat oder Trimethylolpropan-trimethacrylat. Der Gesamtanteil aller Comonomer-Einheiten in den Copolymeren sollte zweckmäßig nicht mehr als 20 Gew.-%, bevorzugt nicht mehr als 15 Gew.-%, betragen, jeweils bezogen auf das Gewicht der Copolymere.

Das "andere Polymer" ist ein synthetisches oder ein natürliches Polymer. Die synthetischen Polymere können verschiedenen Klassen angehören, beispielsweise kann es sich um Polykondensations- oder Polyadditionsprodukte handeln. Erfindungsgemäß handelt es sich um Polyvinylpyrrolidone sowie Copolymere mit Vinylpyrrolidon-Einheiten, Homo- oder Copolymere aus bzw. mit Einheiten aus Vinylalkohol, Polyalkylenglykole oder Polyacrylamide. Geeignet sind weiterhin Proteine (z.B. Kollagenhydrolysate), .

Die Polymere müssen mit dem Acrylat gut verträglich sein und dürfen sich nicht wieder entmischen. Allgemein werden sie in Form einer wäßrige Dispersion oder wäßrigen Lösung eingemischt. Werden "andere Polymere" eingesetzt, die eine mehr oder weniger große Wasserlöslichkeit zeigen (wie Kollagenhydrolysat oder6 Polyamid), dann werden sie zweckmäßig mit einem Vernetzungsmittel, z. B. Glyoxal oder Glutaraldehyd, kombiniert. Damit wird verhindert, daß sie bei der weiteren Verarbeitung der Nahrungsmittelhülle aus der Oberfläche (innen oder außen) herausgelöst werden. Das Vernetzungsmittel wird allgemein in einer Menge von 5 bis 10 Gew.-%, bezogen auf das Gewicht des zu vernetzenden Polymer, zugesetzt.

Die "anderen Polymere" können auch in Form von Fasern vorliegen. Fasern aus natürlichen Polymeren sind insbesondere Kollagenfasern. Sie können eine Länge von bis zu 4 mm, bevorzugt bis zu 2 mm haben. Eine wesentliche Funktion der weiteren Polymere besteht darin, die Haft- und Trenneigenschaften an einem in der Hülle befindlichen Lebensmittel zu bestimmen. Eine weitere wesentliche Funktion besteht darin, die Permeation der Hülle in der gewünschten Weise einzustellen, d.h. insbesondere die Permeation zu erhöhen. Sie wirken also nicht einfach nur als reine Verdicker, wie die in der DE 31 47 519 beschriebenen Celluloseether. Das andere Polymer zeigt vorzugsweise eine relativ große Wasserlöslichkeit. In einem Liter Wasser von 20 °C lösen sich vorzugsweise mindestens 25 g davon, besonders bevorzugt mindestens 50 g. Der Anteil dieses Polymers muß so groß sein, daß eine ausreichende Haftung an dem vorgesehenen Nahrungsmittel sichergestellt ist. Je nach Art des anderen Polymers beträgt dessen Anteil zweckmäßig 8 bis 49 Gew.-%, bevorzugt 15 bis 30 Gew.-%, bezogen auf das Gesamtgewicht der Beschichtung.

In einer bevorzugten Ausführungsform bildet das genannte "andere Polymer" eine durchgehende zusätzliche Schicht, die sich auf einer Schicht mit Acrylharz befindet. Die Schicht kann dabei relativ dünn sein, gerade ausreichend um eine ausreichende Haftung an einem Nahrungsmittel, insbesondere einem Wurstbrät, zu gewährleisten.

Durch den Zusatz des mindestens einen anderen Polymers zeigt die erfindungsgemäße Hülle eine hohe H₂O-Permeation. Diese beträgt allgemein etwa 30 bis 600 l/m² d, bestimmt gemäß ISO 15106-3:2003(E) .

Das Gesamtgewicht der Beschichtung(en) beträgt allgemein etwa 30 bis 100 g/m², bevorzugt etwa 40 bis 80 g/m². Die Nahrungsmittelhülle weist somit ein Gesamtgewicht auf von etwa 45 bis 175 g/m², bevorzugt von etwa 60 bis 120 g/m².

Das flächenförmige Fasergebilde ist bevorzugt ein Spinnvlies, ein verfestigtes Vlies, ein Faserpapier, ein Gewebe oder ein Gewirke. Die Fasern, aus denen das Fasergebilde aufgebaut ist, bestehen insbesondere aus Kunstfasern, wie Polyamid-, Polyacrylnitril-, Polypropylen- und/oder Polyesterfasern, und/oder aus Naturfasern, wie Hanffasern, Baumwollfasern, Seide, Leinen, Wolle, und/oder aus modifizierten natürlichen Materialien, wie regenerierter Cellulose. Besonders bevorzugt sind Polyamid-Spinnvliese sowie Hanffaserpapiere, die verschweißte Polypropylenfasern enthalten. Das flächenförmige Fasergebilde hat - vor dem Beschichten - allgemein ein Gewicht von 12 bis 80 g/m², bevorzugt von 18 bis 60 g/m².

Das flächenförmige Fasergebilde kann entweder nur auf einer Seite oder auch auf beiden Seiten beschichtet werden. Bei beidseitig beschichteten Fasergebilden kann die Beschichtung auf der Seite, die später von dem Nahrungsmittel abgewandt ist, d.h. die Außenseite der Hülle bildet, zusätzlich noch Pigmente enthalten, die die Rauhigkeit der Oberfläche erhöhen. Dazu geeignet sind beispielsweise anorganische oder organische, partikel- oder faserförmige Materialien, wie (mikro)kristalline Cellulose oder Kollagen-Fibrillen.

Die Herstellung der Nahrungsmittelhülle erfolgt beispielsweise durch Beschichten des flächenförmigen Fasergebildes mit Hilfe von üblichen Vorrichtungen, beispielsweise durch Walzenrakel, Luftrakel oder Gummituchrakel. Die dabei als Streichmassen verwendeten wäßrigen Dispersionen sind allgemein so hoch viskos, daß Verdickungsmittel nicht notwendig und damit auch nicht vorhanden sind. Nach dem Beschichten erfolgt eine Trocknung, vorzugsweise mit Heißluft oder durch Infrarotstrahlen. Die Trocknungstemperatur beträgt zweckmäßig etwa 90 bis 150 °C, kurzzeitig können auch Temperaturen bis 190 °C erreicht werden. Das Beschichten und Trocknen wird gegebenenfalls ein- oder mehrmals wiederholt, entsprechend der Zahl der Beschichtungen. Wenn das beschichtete flächenförmige Fasergebilde für eine direkte Weiterverarbeitung zu breit ist, wird es in mehrere Bahnen passender Breite geschnitten, die dann jeweils zu einem Schlauch mit überlappenden Längskanten geformt werden. Die Längskanten werden fest miteinander verbunden, vorzugsweise durch Verkleben. Als Kleber eignen sich besonders sogenannte Hotmelt-Kleber und Kleber auf Basis von Polyurethan. Die Längskanten können auch durch Verschweißen miteinander verbunden werden, beispielsweise durch Hochfrequenz-Verschweißen. Dabei können zusätzlich noch Schmelzkleber verwendet werden. Die erfindungsgemäße Hülle läßt sich mit den genannten Verfahren einfach und preiswert herstellen.

Die schlauchförmigen Hüllen können wie üblich konfektioniert werden, d.h. zu einseitig verschlossenen Abschnitten oder als Bunde vertrieben werden. Vorzugsweise werden sie jedoch gerafft, so daß sie auf schnellaufenden Füllmaschinen verarbeitet werden können.

Verwendung findet die erfindungsgemäße Nahrungsmittelhülle vor allem als künstliche Wursthülle, insbesondere für Brühwurst, ganz besonders für geräucherte Brühwurst, wie Fleischwurst, Bierwurst, Leberwurst, oder für Pasteten. Große Kaliber der erfindungsgemäßen Hülle können auch für gekochten Schinken eingesetzt werden. Besonders geeignet ist die Hülle für die Herstellung von sogenannter Slicer-Ware, d.h. von Wurstwaren, von denen die Hülle entfernt ist und die in Form von Aufschnitt verkauft werden. Dabei dient die Hülle vor allem der Formgebung.

Die nachfolgenden Beispiele dienen zur Illustration der Erfindung. Prozente sind darin Gewichtsprozente, soweit nicht anders angegeben oder aus dem Zusammenhang unmittelbar ersichtlich. Gt steht für Gewichtsteil(e).

### Beispiel 1

Ein Polyamid-Spinnvlies (Typ FFL 2704 von Freudenberg) mit einem Gewicht von 60 g/m² in Form einer 165 cm breiten Bahn wurde zuerst mit einer Butylacrylat-Polymer enthaltenden Streichmasse beschichtet und mit Heißluft getrocknet. Die so hergestellte Beschichtung hatte ein Gewicht von 10 g/m². Darauf wurde eine wäßrige Lösung von Polyvinylpyrrolidon (PVP K 120) aufgetragen. Die zweite Beschichtung hatte ein Gewicht von 24 g/m². Darauf wurde wiederum eine weitere wäßrige Streichmasse aufgetragen, die eine Mischung aus 80 Gt Butylacrylat-Polymer und 20 Gt Kollagen-Hydrolysat enthielt. Danach wurde die Bahn kurzzeitig bei 180 °C getrocknet. Die dritte Beschichtung hatte nach dem Trocknen ein Gewicht von 15 g/m². Das Gesamtgewicht des Materials betrug dementsprechend 109 g/m². Es war in hohem Maße rauchdurchlässig, und seine Wasserdampf-Durchlässigkeit lag bei 60 g/m² d.

Das beschichtete Spinnvlies wurde in einzelne Bahnen mit einer Breite von 19,2 cm geschnitten, die dann jeweils zu einem Schlauch mit überlappenden Längskanten geformt wurden, wobei sich die Beschichtungen auf der Innenseite befanden. Die Längskanten wurden mit einem Hotmelt-Kleber fest verbunden. Auf diese Weise wurde eine schlauchförmige Hülle vom Kaliber 60 erzeugt. Die Hülle wurde dann gerafft, anschließend mit Bierwurstbrät gefüllt, gebrüht und geräuchert. Danach wurde die Hülle abgezogen, das Wurstbrät in Scheiben geschnitten und mit einer Folienverpackung umgeben.

### Beispiel 2

Ein Hanffaserpapier mit einer Breite von 165 cm und einem Gewicht von 25,4 g/m², das 10 % verschweißte Polypropylenfasern enthielt, wurde mit einer Streichmasse beschichtet, die eine Mischung aus 90 Gt n-Butylacrylat-Polymer und 10 Gt Polyvinylpyrrolidon (PVP K120) enthielt. Nach dem Trocken mit Heißluft betrug das Schichtgewicht 8 g/m². Anschließend wurden zwei weitere Schichten aus dem gleichen Polymergemisch aufgebracht. Die zweite Schicht hatte ein Gewicht von 20 g/m², die dritte von 15 g/m². Die so beschichtete Bahn wurde in 22,2 cm breite Bahnen geschnitten, die dann jeweils zu einem Schlauch mit überlappenden Längskanten geformt wurden, wobei sich die Beschichtungen wiederum auf der Innenseite befanden. Die Längskanten wurden dann, wie im Beispiel 1, mit einem Hotmelt-Kleber fest miteinander verbunden. Die auf diese Weise hergestellte Hülle vom Kaliber 70 war wesentlich geschmeidiger als eine Hülle aus einem nur mit Acrylat beschichteten Faserpapier.

Die Hülle wurde gerafft, mit Fleischwurstbrät gefüllt und geräuchert. Nach dem Räuchern wurde die Hülle abgezogen, die Wurst in Scheiben geschnitten und mit einer Folienverpackung umgeben.

## Patentansprüche

1. Nahrungsmittelhülle bestehend aus einem ein- oder beidseitig mit Acrylharz beschichteten, flächenförmigen Fasergebilde, wobei das Fasergebilde auf der dem Nahrungsmittel zugewandten Seite mit Acrylharz und mindestens einem anderen Polymer beschichtet ist und die Hülle eine H₂O-Permeation von 30 bis 600 1/m² d aufweist und für Rauchbestandteile durchlässig ist, wobei das andere Polymer mit dem Acrylharz abgemischt ist und ein Polyvinylpyrrolidon oder ein Copolymer mit Vinylpyrrolidon-Einheiten, ein Homo- oder Copolymer aus bzw. mit Einheiten aus Vinylalkohol, ein Polyalkylenglykol, ein Polyacrylamid oder ein Protein ist,-wobei die Nahrungsmittelhülle schlauchförmig ist und mindestens eine Längsnaht aufweist.

2. Nahrungsmittelhülle gemäß Anspruch 1 **dadurch gekennzeichnet, daß** das Acrylat ein Homo- oder Copolymer aus bzw. mit Einheiten von Estern der Acrylsäure oder Methacrylsäure mit (C₁ - C₁₀) Alkanolen ist.

3. Nahrungsmittelhülle gemäß einem der Ansprüche 1 bis 2, **dadurch gekennzeichnet, daß** das andere Polymer eine Löslichkeit in Wasser von 20 °C von mindestens 25 g/l, bevorzugt mindestens 50 g/l, aufweist.

4. Nahrungsmittelhülle gemäß einem oder mehreren der Ansprüche 1 bis 3, **dadurch gekennzeichnet, daß** der Anteil des anderen Polymers 8 bis 49 Gew.-%, bevorzugt 15 bis 30 Gew.-%, bezogen auf das Gesamtgewicht der Beschichtung, beträgt.

5. Nahrungsmittelhülle gemäß einem oder mehreren der Ansprüche 1 bis 4, **dadurch gekennzeichnet, daß** die dem Nahrungsmittel abgewandten Seite der Hülle ebenfalls mit Acrylharz beschichtet ist und daß diese Beschichtung mindestens ein anderes Polymer umfaßt.

6. Nahrungsmittelhülle gemäß Anspruch 5, **dadurch gekennzeichnet, daß** das andere Polymer mit dem Acrylharz vermischt ist und/oder eine eigene Schicht auf der dem Nahrungsmittel abgewandten Seite bildet.

7. Nahrungsmittelhülle gemäß einem oder mehreren der Ansprüche 1 bis 6, **dadurch gekennzeichnet, daß** das Gesamtgewicht der Beschichtung(en) 30 bis 100 g/m², bevorzugt 40 bis 80 g/m², beträgt.

8. Nahrungsmittelhülle gemäß einem oder mehreren der Ansprüche 1 bis 7, **dadurch gekennzeichnet, daß** sie ein Gesamtgewicht auf von 45 bis 175 g/m², bevorzugt von 60 bis 120 g/m², aufweist.

9. Nahrungsmittelhülle gemäß einem oder mehreren der Ansprüche 1 bis 8, **dadurch gekennzeichnet, daß** das flächenförmige Fasergebilde ein Spinnvlies, ein verfestigtes Vlies, ein Faserpapier, ein Gewebe oder ein Gewirke ist.

10. Nahrungsmittelhülle gemäß einem oder mehreren der Ansprüche 1 bis 9, **dadurch gekennzeichnet, daß** die Fasern aus Kunstfasern, bevorzugt aus Polyamid-, Polyacrylnitril-, Polypropylen- und/oder Polyesterfasern, und/oder aus Naturfasern, bevorzugt aus Hanffasern, Baumwollfasern, Seide, Leinen und/oder Wolle, und/oder aus modifizierten natürlichen Materialien, bevorzugt aus regenerierte Cellulose, bestehen.

11. Nahrungsmittelhülle gemäß einem oder mehreren der Ansprüche 1 bis 10, **dadurch gekennzeichnet, daß** das flächenförmige Fasergebilde vor dem Beschichten ein Gewicht von 12 bis 80 g/m², bevorzugt von 18 bis 60 g/m², aufweist.

12. Nahrungsmittelhülle gemäß einem oder mehreren der Ansprüche 1 bis 11, **dadurch gekennzeichnet, daß** die mindestens eine Längsnaht verklebt und/oder verschweißt ist.

13. Verfahren zur Herstellung einer Nahrungsmittelhülle gemäß einem der Ansprüche 1 bis 12, umfassend die folgenden Schritte :
a. Bereitstellen eines flächenförmigen Fasergebildes,
b. Beschichten des Fasergebildes mit einer Streichmasse, die eine wäßrige Dispersion umfaßt, die mindestens ein Acrylat und mindestens ein anderes synthetisches oder natürliches Polymer enthält, wobei das andere Polymer ein Polyvinylpyrrolidon oder ein Copolymer mit Vinylpyrrolidon-Einheiten, ein Homo- oder Copolymer aus bzw. mit Einheiten aus Vinylalkohol, ein Polyalkylenglykol, ein Polyacrylamid oder ein Protein ist
c. Trocknen der Beschichtung,
d. gegebenenfalls Schneiden des beschichteten flächenförmigen Fasergebildes in einzelne Bahnen,
e. Formen der Bahnen zu Schläuchen mit überlappenden Längskanten,
f. Verbinden der Längskanten durch Kleben und/oder Verschweißen und
g. gegebenenfalls Konfektionieren der schlauchförmigen Hülle.

14. Verwendung der Nahrungsmittelhülle gemäß einem oder mehreren der Ansprüche 1 bis 12 als künstliche Wursthülle, bevorzugt für Brühwurst, besonders bevorzugt für geräucherte Brühwurst.

## Claims

1. Food casing consisting of a two-dimensional fibre structure which is coated on one or both sides with acrylic resin, wherein the fibre structure is coated with acrylic resin and at least one other polymer on the side facing the food and the casing has an H₂O permeation of 30 to 600 1/m² d and is permeable to smoke components, wherein the other polymer is blended with the acrylic resin and is a polyvinylpyrrolidone or a copolymer having vinylpyrrolidone units, a homopolymer or copolymer of or comprising units of vinyl alcohol, a polyalkylene glycol, a polyacrylamide or a protein, wherein the food casing is tubular and has at least one longitudinal seam.

2. Food casing according to Claim 1, **characterized in that** the acrylate is a homopolymer or copolymer of or comprising units of esters of acrylic acid or methacrylic acid with (C₁ - C₁₀) alkanols.

3. Food casing according to either of Claims 1 and 2, **characterized in that** the other polymer has a solubility in water of 20 °C of at least 25 g/l, preferably at least 50 g/l.

4. Food casing according to one or more of Claims 1 to 3, **characterized in that** the fraction of the other polymer is 8 to 49 % by weight, preferably 15 to 30 % by weight, based on the total weight of the coating.

5. Food casing according to one or more of Claims 1 to 4, **characterized in that** the side of the casing which is facing away from the food is likewise coated with acrylic resin and **in that** this coating comprises at least one other polymer.

6. Food casing according to Claim 5, **characterized in that** the other polymer is mixed with the acrylic resin and/or forms a separate layer on the side which is facing away from the food.

7. Food casing according to one or more of Claims 1 to 6, **characterized in that** the total weight of the coating(s) is 30 to 100 g/m², preferably 40 to 80 g/m².

8. Food casing according to one or more of Claims 1 to 7, **characterized in that** it has a total weight of 45 to 175 g/m², preferably 60 to 120 g/m².

9. Food casing according to one or more of Claims 1 to 8, **characterized in that** the two-dimensional fibre structure is a spunbonded nonwoven, a consolidated nonwoven, a fibre paper, a woven fabric or a loop-formingly knitted fabric.

10. Food casing according to one or more of Claims 1 to 9, **characterized in that** the fibres consist of artificial fibres, preferably polyamide, polyacrylonitrile, polypropylene and/or polyester fibres, and/or natural fibres, preferably hemp fibres, cotton fibres, silk, linen and/or wool, and/or modified natural materials, preferably regenerated cellulose.

11. Food casing according to one or more of Claims 1 to 10, **characterized in that** the two-dimensional fibre structure, before coating, has a weight of 12 to 80 g/m², preferably 18 to 60 g/m².

12. Food casing according to one or more of Claims 1 to 11, **characterized in that** the at least one longitudinal seam is glued and/or welded.

13. Process for producing a food casing according to any of Claims 1 to 12, comprising the follow steps:
a. providing a two-dimensional fibre structure,
b. coating the fibre structure with a spreading composition which comprises an aqueous dispersion which comprises at least one acrylate and at least one other synthetic or natural polymer, wherein the other polymer is a polyvinylpyrrolidone or a copolymer having vinylpyrrolidone units, a homopolymer or copolymer of or comprising units of vinyl alcohol, a polyalkylene alcohol, a polyacrylamide or a protein,
c. drying the coating,
d. if appropriate, cutting the coated two-dimensional fibre structure into individual strips,
e. shaping the strips into tubes having overlapping longitudinal edges,
f. joining the longitudinal edges by gluing and/or welding and
g. if appropriate, finishing the tubular casing.

14. Use of the food casing according to one or more of Claims 1 to 12 as artificial sausage casing, preferably for scalded-emulsion sausage, particularly preferably for smoked scalded-emulsion sausage.

## Revendications

1. Enveloppe pour produits alimentaires constituée d'une structure fibreuse de forme plate et revêtue sur une ou deux faces de résine acrylique, la structure fibreuse étant revêtue sur la face tournée vers le produit alimentaire de résine acrylique et d'au moins un autre polymère et l'enveloppe ayant une perméabilité au H₂O de 30 à 600 l/m² d et étant perméable aux composants de fumée, l'autre polymère étant mélangé à la résine acrylique et étant une polyvinylpyrrolidone ou un copolymère avec des unités de vinylpyrrolidone, un homopolymère ou copolymère de ou avec des unités d'alcool vinylique, un polyalkylèneglycol, un polyacrylamide ou une protéine, dans lequel l'enveloppe pour produits alimentaires est tubulaire et présente au moins une couture longitudinale.

2. Enveloppe pour produits alimentaires selon la revendication 1, **caractérisée en ce que** l'acrylate est un homopolymère ou copolymère de ou avec des unités d'esters d'acide acrylique ou d'acide méthacrylique avec des alcanols (C₁ - C₁₀).

3. Enveloppe pour produits alimentaires selon l'une quelconque des revendications 1 à 2, **caractérisée en ce que** l'autre polymère présente une solubilité dans l'eau à 20 °C d'au moins 25 g/l, de préférence d'au moins 50 g/l.

4. Enveloppe pour produits alimentaires selon une ou plusieurs des revendications 1 à 3, **caractérisée en ce que** la proportion de l'autre polymère est de 8 à 49 % en poids, de préférence de 15 à 30 % en poids, par rapport au poids total du revêtement.

5. Enveloppe pour produits alimentaires selon une ou plusieurs des revendications 1 à 4, **caractérisée en ce que** le côté de l'enveloppe opposé au produit alimentaire est également revêtu de résine acrylique et que ce revêtement comprend au moins un autre polymère.

6. Enveloppe pour produits alimentaires selon la revendication 5, **caractérisée en ce que** l'autre polymère est mélangé à la résine acrylique et/ou forme sa propre couche sur le côté opposé au produit alimentaire.

7. Enveloppe pour produits alimentaires selon une ou plusieurs des revendications 1 à 6, **caractérisée en ce que** le poids total du ou des revêtements est de 30 à 100 g/m², de préférence de 40 à 80 g/m².

8. Enveloppe pour produits alimentaires selon une ou plusieurs des revendications 1 à 7, **caractérisée en ce qu'**elle a un poids total de 45 à 175 g/m², de préférence de 60 à 120 g/m².

9. Enveloppe pour produits alimentaires selon une ou plusieurs des revendications 1 à 8, **caractérisée en ce que** la structure fibreuse de forme plate est un tissu filé-lié, un tissu non tissé consolidé, un papier de fibres, un tissu tissé ou un tissu à mailles.

10. Enveloppe pour produits alimentaires selon une ou plusieurs des revendications 1 à 9, **caractérisée en ce que** les fibres sont en fibres synthétiques, de préférence en fibres de polyamide, fibres de polyacrylonitrile, fibres de polypropylène et/ou fibres de polyester, et/ou fibres naturelles, de préférence en fibres de chanvre, fibres de coton, soie, lin et/ou laine, et/ou à partir de matières naturelles modifiées, de préférence à partir de cellulose régénérée.

11. Enveloppe pour produits alimentaires selon une ou plusieurs des revendications 1 à 10, **caractérisée en ce que** la structure fibreuse de forme plate a un poids de 12 à 80 g/m², de préférence de 18 à 60 g/m² avant le revêtement.

12. Enveloppe pour produits alimentaires selon une ou plusieurs des revendications 1 à 11, **caractérisée en ce que** l'au moins une couture longitudinale est collée et/ou soudée.

13. Procédé de fabrication d'une enveloppe pour produits alimentaires selon l'une quelconque des revendications 1 à 12, comprend les étapes suivantes :
a. fourniture d'une structure fibreuse de forme plate,
b. revêtement de la structure fibreuse avec une couche de revêtement qui comprend une dispersion aqueuse, qui contient au moins un acrylate et au moins un autre polymère synthétique ou naturel, l'autre polymère étant une polyvinylpyrrolidone ou un copolymère avec unités de vinylpyrrolidone, un homopolymère ou copolymère de ou avec des unités d'alcool vinylique, un polyalkylèneglycol, un polyacrylamide ou une protéine
c. séchage du revêtement,
d. le cas échéant, découpe de la structure fibreuse de forme plate revêtue en bandes individuelles,
e. formation des bandes en tubes avec des bords longitudinaux qui se chevauchent,
f. assemblage des bords longitudinaux par collage et/ou soudage et
g. le cas échéant, assemblage de l'enveloppe tubulaire.

14. Utilisation de l'enveloppe pour produits alimentaires selon une ou plusieurs des revendications 1 à 12 comme boyau de saucisse artificiel, de préférence pour saucisse à bouillir, le plus préférentiellement pour saucisse à bouillir fumée.
